# EUROPÄISCHE PATENTSCHRIFT

(11) **EP 3 418 100 B1**
(45) Veröffentlichungstag und Bekanntmachung des Hinweises auf die Patenterteilung: **23.02.2022**
(21) Anmeldenummer: 18189473.4
(22) Anmeldetag: 05.05.2009
(51) Int. Cl.: B60K 23/08

(54) **ANTRIEBSSTRANG FÜR EIN KRAFTFAHRZEUG MIT ZUSCHALTBARER SEKUNDÄRACHSE**
POWER TRAIN FOR A MOTOR VEHICLE WITH SECONDARY AXIS WHICH CAN BE ACTIVATED
FAISCEAU D'ENTRAÎNEMENT POUR UN VÉHICULE AUTOMOBILE DOTÉ D'UN AXE SECONDAIRE COMMUTABLE

(30) Priorität: 06.05.2008 DE 102008002844; 13.11.2008 DE 102008057272
(43) Veröffentlichungstag der Anmeldung: 26.12.2018
(62) Teilanmeldung aus: 09159451.5
(73) Patentinhaber: GKN Automotive Ltd., Redditch, Worcestershire B98 0AJ (GB)
(72) Erfinder: HOFFMANN, Werner, verstorben (DE); HÖCK, Michael, 53819 Neunkirchen-Seelscheid (DE); POTULSKI, Jan, 50733 Köln (DE); ADELT, Matthias, 44807 Bochum (DE); NETT, Hans-Peter, 53518 Adenau (DE)
(74) Vertreter: btb IP Bungartz Baltzer Partnerschaft mbB Patentanwälte

(56) Entgegenhaltungen:
- EP-A2- 0 037 104
- DE-A1- 19 800 328
- DE-A1-102004 009 113
- DE-A1-102004 015 304
- DE-A1-102006 038 358
- JP-A- H0 257 725
- JP-A- 2002 370 557
- US-A1- 2004 087 408
- US-A1- 2004 106 487
- US-A1- 2006 163 018
- US-A1- 2007 238 567
- US-A1- 2008 053 780

## Beschreibung

Die Erfindung betrifft eine Sekundärachsantriebseinheit, eingerichtet für den Antrieb einer Sekundärachse in einem Kraftfahrzeugantriebstrang, der einen Primärantriebsstrang mit einer permanent angetriebenen Primärachse und eine der Primärachse über eine Zuschalteinrichtung zuschaltbare Sekundärachse umfasst, wobei die Sekundärachsantriebseinheit zumindest eine Seitenwellenkupplung aufweist, über die bei zugeschalteter Sekundärachse die Sekundärachsantriebsleistung in Sekundärachsseitenwellen der Sekundärachse eingeleitet und auf Antriebsräder der Sekundärachse übertragbar ist und über die bei entkoppelter Sekundärachse der zwischen der Zuschalteinrichtung und der zumindest einen Seitenwellenkupplung befindliche Abschnitt des Sekundärantriebsstrangs von den Antriebsrädern der Sekundärachse entkoppelbar ist, und wobei die zumindest eine Seitenwellenkupplung eine reibschlüssig wirkende Reiblamellenkupplung mit einem Außenlamellenträger, einem Innenlamellenträger und einem Lamellenpaket mit Innenlamellen und Außenlamellen ist. Die Erfindung betrifft einen Antriebstrang eines Kraftfahrzeugs mit einer solchen Sekundärachsantriebseinheit, umfassend eine über einen Primärantriebsstrang permanent angetriebene Primärachse und eine der Primärachse über eine Zuschalteinrichtung zuschaltbare, von einem Sekundärantriebsstrang antreibbare Sekundärachse, wobei die Zuschalteinrichtung einen Zuschaltmechanismus aufweist, über den der Sekundärantriebsstrang in den die Gesamtantriebsleistung übertragenden Antriebsstrang integrierbar ist, und wobei bei zugeschalteter Sekundärachse die Sekundärachsantriebsleistung über Seitenwellenkupplungen in Seitenwellen der Sekundärachse eingeleitet und auf Antriebsräder der Sekundärachse übertragen ist, und wobei bei entkoppelter Sekundärachse der zwischen der Zuschalteinrichtung und der zumindest einen reibschlüssigen Seitenwellenkupplung befindliche Abschnitt des Sekundärantriebsstrangs sowohl von dem Primärantriebsstrang als auch von den Sekundärantriebsrädern entkoppelt ist.

Achsantriebseinheiten und Antriebsstränge mit zuschaltbaren Sekundärachsen sind im Kraftfahrzeugbau insbesondere als manuell zuschaltbarer Allradantrieb bekannt. Sie dienen dazu, dem Fahrer in bestimmten Betriebssituationen die Möglichkeit zu geben, die Antriebsleistung auf alle Antriebsräder des Fahrzeugs zu verteilen.

Bekannt sind einerseits Antriebsstränge, die die Zuschaltung der Sekundärachse meist ausschließlich dann erlauben, wenn das Fahrzeug steht. Hierzu gehören insbesondere formschlüssig arbeitende, mechanische Radnabenschaltungen, die entweder aufwendig von Hand oder über zusätzlich im Fahrzeug vorzusehende Schalt- und Steuereinheiten eingekuppelt werden. Außerdem muss der Fahrer das Verteilergetriebe manuell von Einachsantrieb auf Allradantrieb umschalten. Das Schalten während der Fahrt ist aufgrund fehlender Drehzahlsynchronisation der formschlüssig ineinandergreifenden Kraftübertragungselemente meist ausgeschlossen oder wenn dann nur bei geringen Geschwindigkeiten möglich. Ferner kann es bei einem Umschalten von Allrad- auf Einachsantrieb notwendig sein, zunächst einige Meter rückwärts zu fahren, um eine Entsperrung der Freilaufeinrichtung zu erreichen. Solche Systeme kommen vor allem bei geländegängigen Fahrzeugen zum Einsatz und sind entweder werksseitig vorgesehen oder als Nachrüstsatz erhältlich.

Andererseits sind auch Antriebsstränge bekannt, die eine Zuschaltung während der Fahrt ermöglichen. Eine zuschaltbare Sekundärachse wird auch als "Hang-On" Achse bezeichnet. Hierbei werden über eine im Gesamtantriebsstrang vorgesehene Kupplung die Sekundärantriebsräder vom Fahrzeugantrieb abgekoppelt. Es kommen dabei insbesondere reibschlüssige Kupplungen zum Einsatz, die ein Zuschalten der Sekundärachse während der Fahrt ermöglichen. Eine solche Hang-on Lösung eines zuschaltbaren Allradantriebs beschreibt die Offenlegungsschrift DE 10 2006 038 358 A1.

Antriebsstränge mit zuschaltbaren Sekundärachsen bringen allerdings eine Reihe von Nachteilen mit sich. Zunächst ist zu beachten, dass die Antriebsräder der Primärachse und die Antriebsräder der Sekundärachse insbesondere bei Kurvenfahrten, aber auch in anderen Betriebssituationen, unterschiedliche Wege zurücklegen, was ohne einen entsprechenden Drehzahldifferenzausgleich zu Verspannungen im Antriebsstrang führen würde. Um Verspannungen, die durch unterschiedliche Antriebsraddrehzahlen an Primärachse und Sekundärachse hervorgerufen werden, abzubauen, ist ein Längsausgleich bzw. Längsdifferential vorzusehen. Verspannungen, die durch unterschiedliche Antriebsraddrehzahlen der Antriebsräder der Sekundärachse hervorgerufen werden, werden durch einen Querausgleich, der üblicher Weise durch ein Querdifferential gebildet wird, ausgeglichen. Außerdem muss die Sekundärachsantriebsleistung ausgehend von der regulär angetriebenen Primärachse auf die Sekundärachse übertragen werden, was üblicher Weise über ein Winkelgetriebe und eine Zwischenwelle, an die sich das Querdifferential anschließt, geschieht. Diese gegenüber einem Fahrzeug, das ausschließlich mit einer permanent angetriebenen Primärachse ausgestattet ist, vorzusehenden zusätzlichen Systemkomponenten machen den Antriebsstrang in konstruktiver Hinsicht deutlich komplexer. In der Folge sind die Kosten des Fahrzeugs in der Entwicklung und Konstruktion merklich höher. Auch die größere Anzahl an benötigten Bauteilen macht einen solchen Antriebsstrang teuer und trägt zu einem Mehrgewicht bei, das wiederum zu einem Kraftstoffmehrverbrauch führt.

Darüber hinaus verringern zahlreiche Faktoren die im Betrieb tatsächlich zur Verfügung stehende Nettoantriebsleistung, also den Teil der antriebsseitig zur Verfügung gestellten Gesamtantriebsleistung, der tatsächlich zum Vortrieb des Fahrzeugs nutzbar ist, und zwar auch dann, wenn die Sekundärachse nicht zugeschaltet ist. In diesem Fall ist der Sekundärachsantriebsstrang an einer Stelle zwischen der Primärachse und den Antriebsrädern über die Zuschalteinrichtung unterbrochen, so dass keine Antriebsleistung auf die Sekundärachsantriebsräder übertragen wird. Die Komponenten des Sekundärantriebsstrangs werden allerdings nach wie vor entweder durch den Fahrzeugantrieb über die Primärachse und/oder durch die Sekundärachsantriebsräder angetrieben bzw. passiv mitgeschleppt, ohne dabei Antriebsleistung zu übertragen. Dadurch treten Reibungsverluste (Lagerreibung, Panschverluste, Reibung von Zahnradeingriffen, usw.) auf und die rotierenden Massen der Sekundärabtriebsstrangkomponenten (Differential, Zwischenwelle, Kupplungen, usw.) sind bei dynamischer Fahrt ständig mit dem Fahrzeug zu beschleunigen bzw. zu verzögern. Diese Verlustleistung trägt maßgeblich dazu bei, dass der Kraftstoffverbrauch bei einem Fahrzeug mit zuschaltbarer Sekundärachse selbst bei entkoppelter Sekundärachse merklich höher ist als bei einem Kraftfahrzeug, das keine antreibbare Sekundärachse aufweist. Zieht man außerdem in Betracht, dass die Betriebszeiten, in denen die zuschaltbare Sekundärachse tatsächlich in den Gesamtantriebsstrang aktiv eingebunden ist, nur einen sehr geringen Anteil der Gesamtbetriebszeiten eines Fahrzeugs mit zuschaltbarer Sekundärachse ausmachen, lässt sich schlussfolgern, dass über die Gesamtbetriebszeit hinweg eine nicht unerhebliche Menge an Kraftstoff eingespart werden könnte. Kunden, die ein Fahrzeug wünschen, dass eine wahlweise zuschaltbare Sekundärachse vorsieht, müssen den Mehrverbrauch allerdings in Kauf nehmen, selbst wenn sie von der Zuschaltung kaum Gebrauch machen.

Wenn die zumindest eine Seitenwellenkupplung eine reibschlüssige Kupplung ist und bei entkoppelter Sekundärachse der zwischen der Zuschalteinheit und den Seitenwellenkupplungen befindliche Abschnitt des Sekundärantriebsstrangs mittels dieser zumindest einen Seitenwellenkupplung sowohl von dem Primärantriebsstrang, insbesondere von der Primärachse, als auch von den Sekundärantriebsrädern entkoppelbar ist, lässt sich bei bei entkoppelter Sekundärachse die Verlustleistung minimieren. Ein weiterer Vorteil besteht darin, dass der konstruktive Mehraufwand und das damit einhergehende Mehrgewicht eines Fahrzeugs mit zuschaltbarer Sekundärachse trotz der Möglichkeit eines Längsausgleichs zwischen Primär- und Sekundärachse und der Möglichkeit eines Querausgleichs an der Sekundärachse reduziert werden kann. Die Sekundärachse kann während der Fahrt, insbesondere auch bei höheren Geschwindigkeiten, automatisiert zuschaltbar sein. Gegenüber den manuell zuschaltbaren Radnabenkupplungen sind insbesondere Bedienungskomfort und Alltagstauglichkeit erhöht.

Beim Zuschalten des Sekundärantriebsstrangs werden sowohl die Seitenwellenkupplungen als auch die Zuschalteinrichtung eingekuppelt, was den Sekundärantriebsleistungsfluss von der Primärachse zu den Sekundärachsantriebsrädern ermöglicht. Beim Entkoppeln des Sekundärantriebsstrangs werden sowohl die Seitenwellenkupplungen als auch die Zuschalteinrichtung entkoppelt, so dass bei entkoppelter Sekundärachse der zwischen der Zuschalteinrichtung und den Seitenwellenkupplungen befindliche Abschnitt des Sekundärantriebsstrangs sowohl von der Antriebsleistung als auch von den Antriebsrädern der Sekundärachse entkoppelt ist. Dabei sollte angestrebt werden, möglichst viele Komponenten stillzulegen. Auch andere Maßnahmen, die die Verlustleistung reduzieren, sind sinnvoll.

Durch diese Ausgestaltung des Antriebsstrangs ist es möglich, einen Großteil des Sekundärantriebstrangs bei abgekoppelter Sekundärachse vollständig still zu legen. Die zu dem stillgelegten Abschnitt des Sekundärachsantriebsstrangs gehörenden Antriebsstrangkomponenten verursachen in der Folge keine Verlustleistung. Reibschlüssige Kupplungen sind vorgesehen, um insbesondere die Drehzahl der sowohl vom Fahrzeugantrieb als auch von den Antriebsrädern der Sekundärachse entkoppelten Komponenten des Sekundärantriebsstrangs vor dem Eingliedern in den Gesamtantriebsstrang an die Drehzahl der nicht entkoppelten Komponenten des Antriebsstrangs anzugleichen. Einen Antriebsstrang, der sich an diesem Gedanken orientiert, offenbart die Druckschrift JP 2002-370557 A. Auch dieser Antriebsstrang lässt sich hinsichtlich der Reduzierung der Verlustleistung bei abgeschalteter Sekundärachse aber weiter verbessern.

Durch die Merkmale des Anspruchs 1 können die oben genannten Nachteile vermieden bzw. die oben genannten Vorteile erreicht werden.

Um die Verlustleistung bei abgeschalteter Sekundärachse und stillgelegtem Sekundärantriebsstrang möglichst gering zu halten und eine möglichst hohe Anzahl von Komponenten stillzulegen ist vorgesehen, dass ein Drucklager zwischen dem Lamellenpaket und dem Druckkolben vorgesehen ist, das den Drehzahlausgleich zwischen dem stehenden Druckkolben und dem rotierenden Lamellenpaket gewährleistet, und sich eine Wellfeder zwischen dem Außenlamellenträger und einer Z-Scheibe eines Drucklagers abstützt. Durch eine derartige Anordnung rotieren im abgeschalteten Modus nur wenige Bauteile der Hinterachse und die Verluste werden geringgehalten.

In einer bevorzugten Ausführungsform ist vorgesehen, dass die Seitenwellenkupplungen bei zugeschalteter Sekundärachse eine differentiallose Antriebsleistungsverteilung von dem zwischen der Zuschalteinheit und den Seitenwellenkupplungen befindlichen Teil des Sekundärantriebsstrangs auf die Antriebsräder der Sekundärachse nach Art eines Querdifferentials ausbilden, also insbesondere einen Querausgleich gewährleisten. Die Übertragung der Sekundärachsantriebsleistung auf die Sekundärachse findet also bevorzugt nicht über ein herkömmliches Differentialgetriebe statt, sondern über einen differentiallosen, rein kupplungsgesteuerten Achsantrieb. Die Seitenwellen sind dabei über jeweils eine Seitenwellenkupplung mit dem zwischen der Zuschalteinrichtung und den Seitenwellenkupplungen befindlichen Teil des Sekundärachsantriebsstrangs verbunden. Da die Seitenwellenkupplungen individuell ansteuerbar sind, lässt sich ein definiertes Schlupfverhalten abbilden. Dies hat den weiteren Vorteil, dass über die Seitenwellenkupplungen nicht nur ein Querausgleich, sondern zugleich auch ein Längsausgleich gewährleistet werden kann. Somit bilden die Seitenwellenkupplungen bei zugeschalteter Sekundärachse eine differentiallose Antriebsleistungsverteilung zwischen der Primärachse und der Sekundärachse nach Art eines Längsdifferentials aus. Ein gesondert vorzusehender Längsausgleich, zum Beispiel in Form eines geregelten Längsdifferentials, kann entfallen.

Mit einem solchen differentiallosen Achsantrieb lassen sich neben einem gleichzeitigen Quer- und Längsausgleich auch weitere Funktionen abbilden, wie etwa die eines Active-Yaw Differentials, bei dem über die individuelle Ansteuerung der Kupplungen gezielt ein Giermoment erzeugt werden kann. Über die individuell regelbaren Seitenwellenkupplungen lassen sich außerdem beliebige Sperrwerte abbilden, so dass auch die Funktionen eines Sperrdifferentials realisierbar sind. Durch das Wegfallen einer Vielzahl von ansonsten notwendigen Antriebsstrangkomponenten (Radnabenschaltung, Quer- und Längsdifferential) ist eine kosten- und gewichtsoptimierte Ausgestaltung des Antriebsstrangs möglich. Neben einer Ausgestaltung, bei der beide Seitenwellenkupplungen als reibschlüssig wirkende Seitenwellenkupplungen vorgesehen sind, können die Seitenwellenkupplungen eine erste, reibschlüssig wirkende Seitenwellenkupplung für eine erste Seitenwelle und eine zweite, formschlüssig wirkende Seitenwellenkupplung für eine zweite Seitenwelle umfassen. Zur Schaltung der formschlüssig wirkenden Seitenwellenkupplung kann dabei eine Sekundärachssynchronisierung vorgesehen sein. Zur Übertragung der Antriebsleistung auf die Seitenwellen der Sekundärachse kann ferner ein formschlüssig wirkendes Differentialgetriebe vorgesehen sein.

In einer weiter bevorzugten Ausführungsform weist die Zuschalteinrichtung ein formschlüssig arbeitendes Kraftübertragungsgetriebe, insbesondere ein über Zahnräder arbeitendes Winkelgetriebe, auf. Dabei ist darauf zu achten, dass dieses formschlüssig arbeitende Getriebe geschaltet werden kann, so dass der Formschluss bei nicht zugeschalteter Sekundärachse aufgehoben ist und der zwischen der Zuschalteinrichtung und den Seitenwellenkupplungen befindliche Abschnitt des Sekundärantriebsstrangs vom Fahrzeugantrieb entkoppelt ist. Die Zuschalteinrichtung ist bevorzugt an der Primärachse angeordnet und die Sekundärachsantriebsleistung ist dabei bevorzugt durch den Zuschaltmechanismus bei zugeschaltetem Sekundärantriebsstrang unmittelbar von einer Primärachswelle abgegriffen. Mit Primärachswelle ist nicht notwendiger Weise eine Seitenwelle der Primärachse gemeint. Entscheidend ist vielmehr die räumliche und funktionale Zuordnung der Primärachswelle zum Primärantriebsstrang. Bevorzugt rotiert die Primärachsantriebswelle konzentrisch zu den Primärachsseitenwellen.

Das formschlüssige Kraftübertragungsgetriebe muss selbstverständlich für die vorzusehenden Schaltvorgänge, also insbesondere das Ein- bzw. Auskuppeln des Sekundärantriebsstrangs, synchronisiert werden. Eine solche Drehzahlsynchronisation kann einerseits mittels einer dem Fachmann ohne weiteres geläufigen Getriebesynchronisation gewährleistet werden. Bevorzugt wird das Kraftübertragungsgetriebe zum Herstellen des Formschlusses allerdings über die Seitenwellenkupplungen synchronisiert. Soll der zwischen den Seitenwellenkupplungen und der Zuschalteinrichtung befindliche Teil des Sekundärantriebsstrangs zur Übertragung eines Teils der zur Verfügung stehende Gesamtantriebsleistung auf die Sekundärachse dem Gesamtantriebsstrang zugeschaltet werden, so lässt sich durch Einkuppeln der Seitenwellenkupplungen der Sekundärantriebsstrang, der dann von den auf der Straße abrollenden Antriebsrädern angetrieben ist, auf Schaltdrehzahl schleppen und somit eine Drehzahlsynchronisation vornehmen. Nach Erreichen der Synchronisationsdrehzahl lässt sich der Formschluss über den Zuschaltmechanismus der Zuschalteinrichtung herstellen. Selbst wenn trotz einer solchen Drehzahlangleichung auf eine herkömmliche Synchronisation nicht verzichtet werden soll, so kann dadurch, dass vor der Ankopplung des Sekundärantriebsstrangs die reibschlüssigen Seitenwellenkupplungen leicht geschlossen werden, die Synchronisation unterstützt werden. Die Drehzahlsynchronisation im Zuschaltmechanismus des Kraftübertragungsgetriebes zum Herstellen des Formschlusses wird demnach über die Seitenwellenkupplungen vorgenommen oder zumindest unterstützt. Die Synchronkräfte fallen dadurch gering aus. Die Bauteile können für geringere Belastungen ausgelegt werden, was auch der Lebensdauer der Bauteile zu Gute kommt.

Weiter kann vorgesehen sein, dass die Seitenwellenkupplungen von einer reibschlüssigen Lamellenkupplung gebildet sind, wobei die mit den Sekundärantriebsrädern drehfest verbundenen Reiblamellen mit einem Innenlamellenträger und die fahrzeugantriebsseitigen Lamellen mit einem Außenlamellenträger zusammenwirken. Diese Ausgestaltung ermöglicht den besonders energieeffizienten Einsatz einer bedarfsgesteuerten Beölung der Lamellenpakete ohne zusätzliche, externe Ölförderung. Das Lamellengehäuse bildet dabei einen mit Schmier- und Kühlöl befüllten Ölsumpf, in den die Kupplungslamellen eintauchen. Rotiert der Außenlamellenträger, so nimmt dieser an seiner Außenseite das Öl mit und führt es einem Ölkreislauf zu. Der Außenlamellenträger fördert demnach bei zugeschalteter Sekundärachse Öl zur Kühlung und/oder Schmierung der Reiblamellen. Diese mit Verlustleistung behaftete Ölförderleistung entfällt dann, wenn der Außenlamellenträger bei geöffneter Kupplung nicht rotiert. Dies ist allerdings nur möglich, wenn der Außenlamellenträger Teil des abschaltbaren Abschnitts des Sekundärantriebsstrangs bildet.

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigt:
Fig. 1 einen ersten Antriebsstrang mit permanent angetriebener Primärachse und zuschaltbarer Sekundärachse, dessen zu Grunde liegendes Funktionsprinzip aus dem Stand der Technik bekannt ist,
Fig. 2 einen zweiten Antriebsstrang mit permanent angetriebener Primärachse und zuschaltbarer Sekundärachse, dessen zu Grunde liegendes Funktionsprinzip aus dem Stand der Technik bekannt ist,
Fig. 3 einen Antriebsstrang mit permanent angetriebener Primärachse und zuschaltbarer Sekundärachse, dessen zwischen Seitenwellenkupplungen und Zuschalteinrichtung liegender Abschnitt des Sekundärantriebsstrangs stillgelegt ist,
Fig. 4 eine Zuschalteinrichtung aus Fig. 3 im Detail,
Fig. 5 einen differentiallosen Sekundärachsantrieb aus Fig. 3 mit gelösten Seitenwellenkupplungen im Detail,
Fig. 6 einen differentiallosen Sekundärachsantrieb aus Fig. 3 mit geschlossenen Seitenwellenkupplungen im Detail,
Fig. 7 einen Querschnitt durch eine Seitenwellenkupplung eines differentiallosen Achsantriebs mit selbsttätiger Bedarfsbeölung,
Fig. 8 ein erstes mögliches Antriebsstrangkonzept (quer eingebauter Frontmotor mit permanentem Frontantrieb und zuschaltbarer Hinterachse) in schematischer Darstellung,
Fig. 9a ein zweites mögliches Antriebsstrangkonzept (längs eingebauter Frontmotor mit permanent angetriebener Hinterachse und zuschaltbarer Vorderachse) in schematischer Darstellung,
Fig. 9b ein dem Antriebsstrangkonzept gemäß Figur 9b weitestgehend entsprechendes Antriebsstrangkonzept mit einem blockierbaren Mittendifferential,
Fig. 10 ein drittes mögliches Antriebsstrangkonzept (Heckmotor mit permanent angetriebener Hinterachse und zuschaltbarer Vorderachse) in schematischer Darstellung,
Fig. 11 einen schematisch dargestellten Hydraulikkreis zur Ansteuerung der Schalt- und Regelelemente des Antriebsstrangs,
Fig. 12 ein Figur 8 im Wesentlichen entsprechendes Antriebsstrangkonzept, wobei an der Sekundärachse einseitig eine formschlüssig wirkende Seitenwellenkupplung vorgesehen ist,
Fig. 13 eine erste Darstellung einer an der Primärachse vorgesehenen Zuschalteinrichtung mit einer Synchronisationseinheit,
Fig. 14 eine zweite Darstellung einer an der Primärachse vorgesehenen Zuschalteinrichtung mit einer Synchronisationseinrichtung,
Fig. 15 eine die Sekundärachse antreibende Achsantriebseinheit mit einer formschlüssig wirkenden Seitenwellenkupplung für die linke Seitenwelle,
Fig. 16 eine die Sekundärachse antreibende Achsantriebseinheit, bei der auf einer Seite ganz auf eine Seitenwellenkupplung verzichtet ist, und
Fig. 17 eine bildhafte Darstellung einer die Erfindung verwirklichenden Modulbauweise einer Sekundärachsantriebseinheit.

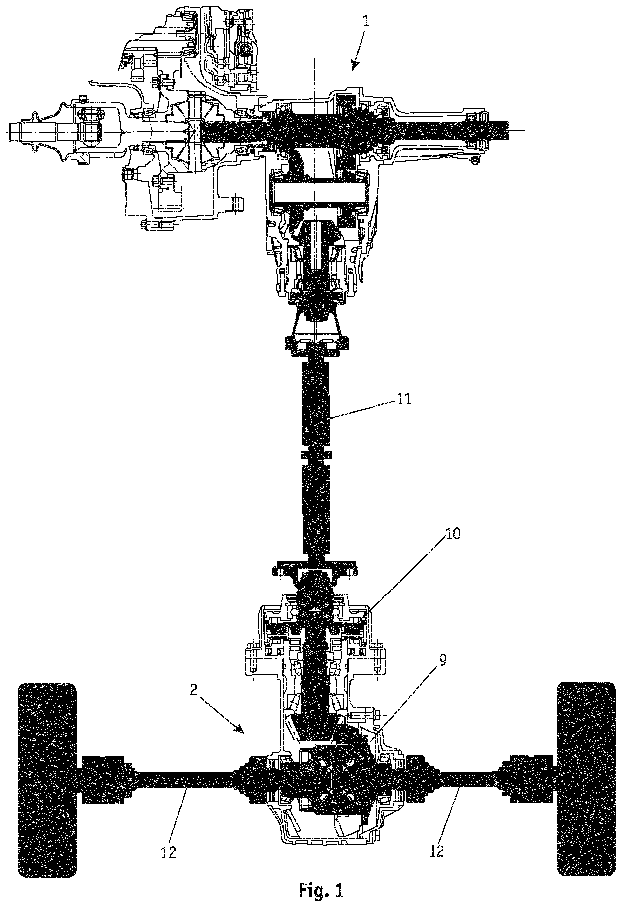

In Figur 1 ist ein Antriebsstrang eines Kraftfahrzeugs gezeigt, der hinsichtlich seines Funktionsprinzips aus dem Stand der Technik bekannt ist. Die Primärachse 1 ist permanent angetrieben. Ein nicht schaltbares Winkelgetriebe zweigt einen Teil der Antriebsleistung von der Primärachse ab und leitet sie in den Sekundärantriebsstrang, der zum Antrieb der Sekundärachse 2 dient, ein. Vor der Achsantriebseinheit 9 ist eine Hang-On Kupplung 10 vorgesehen, die im geschlossenen Zustand eine Zwischenwelle 11 und die Achsantriebseinheit 9 kraftschlüssig koppelt und so die Sekundärachsantriebsleistung bei Bedarf in die Achsantriebseinheit 9 einzuleiten vermag. Die Achsantriebseinheit 9 ist von einem herkömmlichen Aufbau und weist ein Kegelraddifferential auf, an das sich die Sekundärachsseitenwellen 12 anschließen.

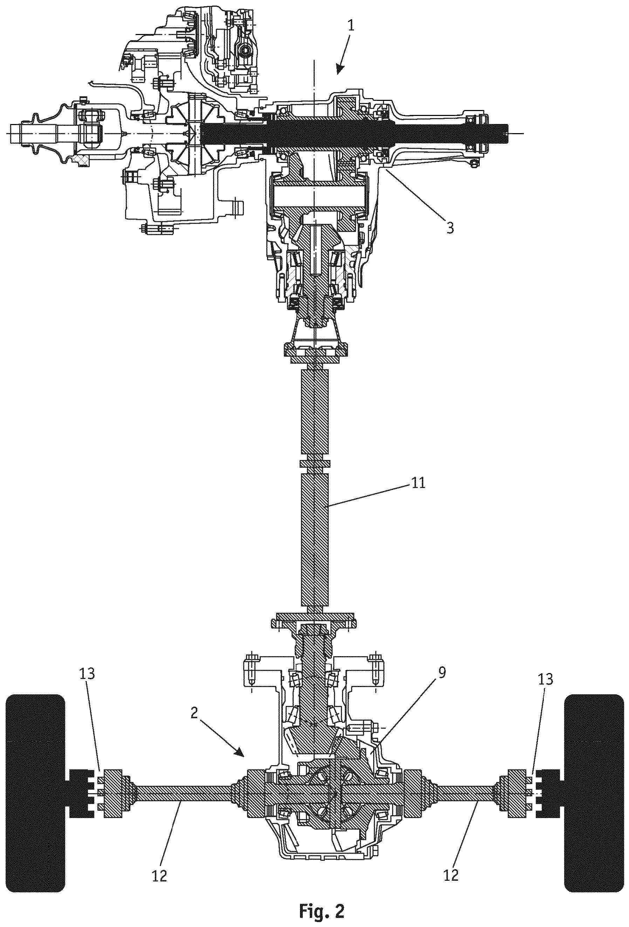

Figur 2 zeigt einen Antriebsstrang eines Kraftfahrzeugs, dessen Funktionsprinzip ebenfalls aus dem Stand der Technik bekannt ist. Im Gegensatz zu Figur 1 ist die Achsantriebseinheit 9 nicht über eine schaltbare Kupplung mit der Zwischenwelle 11 verbunden, sondern die Zwischenwelle 11 ist fest an der Achsantriebseinheit 9 angeflanscht. Um die Antriebsräder der Sekundärachse 2 von der Antriebsleistung zu entkoppeln, sind formschlüssig arbeitende Klauenkupplungen 13 an den Radnaben vorgesehen, die entweder aufwendig von Hand oder durch zusätzlich vorzusehende Zuschaltvorrichtungen in Eingriff gebracht werden können, was aufgrund des Fehlens einer Drehzahlsynchronisation sowie einer Möglichkeit eines Drehzahlabgleichs zwischen den in Eingriff zu bringenden Bauteilen nur im Stand möglich ist. Im Gegensatz zu dem an der Primärachse 1 angeordneten Winkelgetriebe des Antriebsstrangs aus Figur 1 ist das Winkelgetriebe des Antriebsstrangs aus Figur 2 als schaltbare Zuschalteinrichtung 3 ausgebildet, die auch als Power-Take-Off Unit, kurz PTU, bezeichnet wird.

Sowohl beim Antriebsstrang aus Figur 1 als auch beim Antriebsstrang aus Figur 2 ist der Sekundärantriebsstrang nicht in den die Gesamtantriebsleistung übertragenen Teil des Antriebsstrangs integriert und überträgt somit keine Antriebsleistung auf die Antriebsräder der Sekundärachse 2.

Im Beispiel aus Figur 1 rotieren trotzdem die schwarz gekennzeichneten Sekundärantriebsstrangkomponenten mit, denn die Komponenten des Antriebsstrangs, die aus Sicht der der Hang-On Kupplung 10 fahrzeugantriebsseitig angeordnet sind, werden über das Winkelgetriebe geschleppt, während die Sekundärantriebsstrangkomponenten, die aus Sicht der Hang-On Kupplung 10 in Richtung der Antriebsräder der Sekundärachse angeordnet sind, von den auf der Fahrbahn abrollenden Antriebsrädern geschleppt werden.

Im Gegensatz zu dem Antriebsstrang aus Figur 1 rotiert bei dem Antriebsstrang aus Figur 2 ein wesentlicher Abschnitt des Sekundärantriebstrangs nicht mit (einfach schraffiert dargestellter Abschnitt), da antriebsradseitig die Radnabenkupplungen 13 und fahrzeugantriebsseitig die Zuschalteinrichtung 3 nicht in Engriff stehen. Der zwischen diesen Antriebstrangkomponenten angeordnete Abschnitt des Sekundärantriebsstrangs ist also stillgelegt.

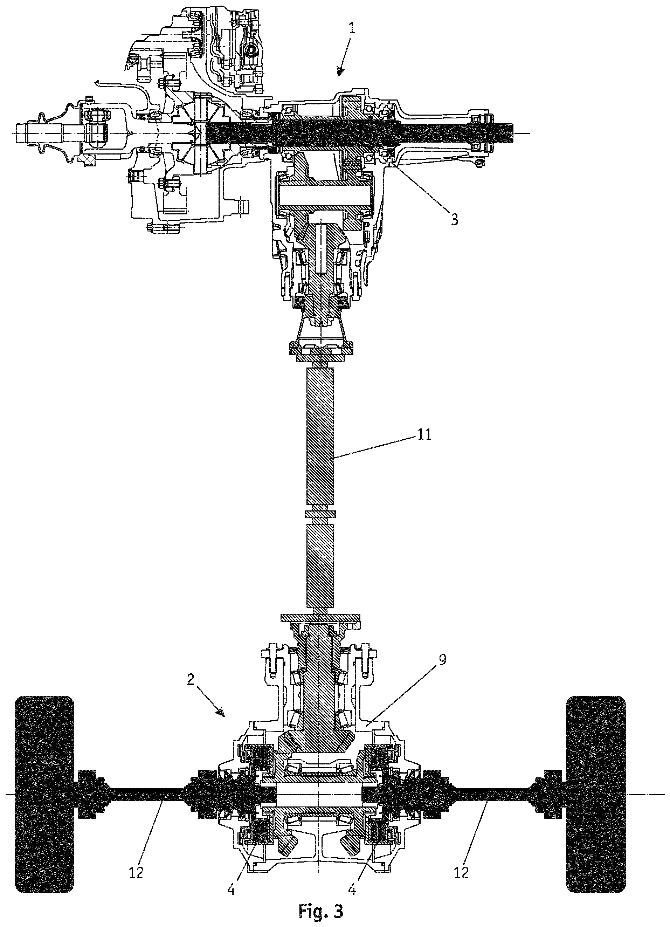

Figur 3 zeigt einen Antriebsstrang mit permanent angetriebener Primärachse 1 und zuschaltbarer Sekundärachse 2, dessen zwischen Seitenwellenkupplungen 4 und Zuschalteinrichtung 3 liegender Abschnitt des Sekundärantriebsstrangs stillgelegt ist. Im Gegensatz zu den Achsantriebseinheiten 9 aus Figur 1 und Figur 2 ist die Achsantriebseinheit 9 aus Figur 3 differentiallos ausgebildet. Hier übertragen zwei reibschlüssig arbeitende Seitenwellenkupplungen 4 die Sekundärantriebsleistung auf die Seitenwellen 12 der Sekundärachse 2. Über diese frei regelbaren Seitenwellenkupplungen 4 lässt sich das zu übertragende Antriebsmoment und der Schlupf frei einstellen, so dass sich mit diesem Achsantrieb neben den Funktionen eines Querdifferentials auch Funktionen eines Längsdifferentials und eines Active-Yaw Differentials abbilden lassen. Die Achsantriebseinheit 9 in Figur 3 ist im Vergleich zu den Achsantriebseinheiten 9 aus den Figuren 1 und 2 in konstruktiver Hinsicht wesentlich weniger komplex ausgebildet und deutlich leichter. Zum Stilllegen des Sekundärantriebsstrangs werden die Seitenwellenkupplungen 4 geöffnet und der Sekundärantriebsstrang über die Zuschalteinrichtung 3 von dem permanent angetriebenen Teil des Antriebsstrangs abgekoppelt. Weder die Seitenwellenkupplungen 4 noch die Zuschalteinrichtung 3 könnten für sich genommen den erfindungsgemäßen Grundgedanken verwirklichen, im Hinblick auf die Erfindung wirken sie vielmehr in einer synergetischen Weise zusammen.

Ein rechnerischer Vergleich der Antriebsstrangkonzepte aus den Figuren 1, 2 und 3 hat gezeigt, dass die in den Gesamtantriebssträngen bei abgeschalteter Sekundärachse auftretenden Verlustleistungen deutlich unterschiedlich sind. Während durch die Vielzahl der rotierenden Antriebsstrangkomponenten die Verlustleistung des Antriebsstrangs aus Figur 1 bei 100 km/h etwa 2,7 kW beträgt, so beträgt sie bei einem Antriebsstrang gemäß Figur 2 bei der selben Geschwindigkeit nur etwa 0,08 kW, also weniger als ein Dreißigstel, wobei aber bei dem letztgenannten Antriebsstrang die bereits aufgeführten Nachteile eine erhebliche Einschränkung an Komfort und Praktikabilität mit sich bringen. Die im Antriebsstrang von Figur 3 bei 100 km/h auftretende Verlustleistung wurde mit 0,31 kW errechnet und liegt damit nur unwesentlich über der Verlustleistung des Antriebsstrangs aus Figur 2, beträgt aber immerhin nur etwa ein Zehntel der Verlustleistung, die beim Antriebsstrang aus Figur 1 zu erwarten ist, ohne dass der Fahrer dabei Komfort- und Praktikabilitätseinbußen hinnehmen müsste.

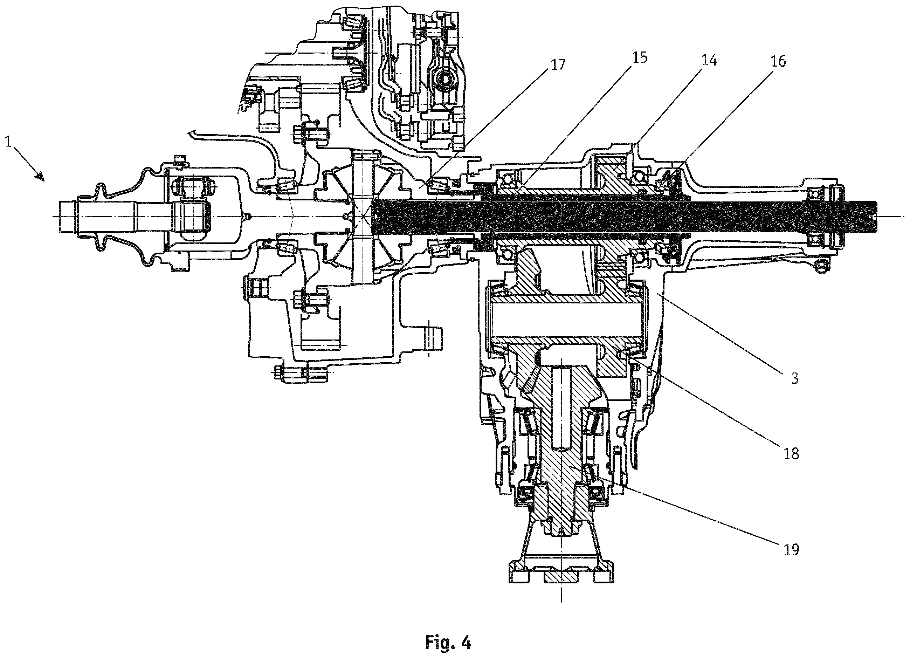

Figur 4 zeigt die Zuschalteinrichtung 3 aus Figur 3 im Detail. Es handelt sich um ein schaltbares Winkelgetriebe, bei dem der Formschluss dadurch erfolgt, dass eine Stirnradstufe 14 mit einer Verbindungswelle 15, die vom Antriebskorb 17 des Primärachsdifferentials permanent angetrieben ist, mit Hilfe eines Zuschaltmechanismus, der hier von einer Synchronisierung 16 gebildet ist, in Eingriff gebracht wird. Wie aus der Figur 4 ersichtlich, rotiert bei abgeschaltetem Sekundärantrieb die Stirnradstufe 14 nicht mit dem permanent angetriebenen Primärantriebstrang mit. Der Koppelpunkt zwischen permanent angetriebenem Primärantriebsstrang und zuschaltbarem Sekundärantriebsstrang ist also die Synchronisierung 16. Bei zugeschaltetem Sekundärantriebsstrang überträgt die Stirnradstufe 14 die Sekundärachsantriebsleistung zunächst über eine Querwelle 18 auf ein Tellerrad, das die Antriebsleistung wiederum über eine Ritzelwelle 19 in die Zwischenwelle 11 einleitet und somit zur Sekundärachse weiterleitet.

Eine solche mehrstufige Ausführung der Weiterleitung des Sekundärantriebsleistungsflusses ist nicht zwingend erforderlich. Es können auch weitere Vereinfachungen vorgenommen werden, beispielsweise dadurch, dass schon die Verbindungswelle 14 kein Stirnrad, sondern direkt ein Tellerrad zur Weiterleitung der Sekundärantriebsleistung in die Ritzelwelle vorsieht.

Um die Synchronisierung von Stirnradstufe 14 und Verbindungswelle 15 zu unterstützen, ist vorgesehen, dass die Seitenwellekupplungen vor dem Synchronisieren der Wellen geschaltet werden, um die Zwischenwelle 11 und somit auch die Stirnradwelle 14 auf Drehzahl zu bringen. Die Betätigung des Zuschaltmechanismus erfolgt vorzugsweise hydraulisch, kann aber selbstverständlich auch auf andere Weise, zum Beispiel pneumatisch, elektromotorisch oder elektromagnetisch, erfolgen.

Neben der in Figur 4 dargestellten formschlüssig arbeitenden Synchronisierung ist es selbstverständlich auch denkbar, andere formschlüssige oder auch kraftschlüssige Zuschaltmechanismen vorzusehen. So kann an Stelle der Synchronisierung auch eine reibschlüssige Kupplung den Sekundärantriebsleistungsfluss von der Verbindungswelle 15 auf die Stirnradstufe 14 gewährleisten. In diesem Fall könnten außerdem formschlüssig arbeitende Seitenwellenkupplungen vorgesehen sein, wodurch allerdings die Vorteile eines differentiallosen Antriebsstrangs aufgegeben werden würden. Trotzdem sind durchaus Fälle denkbar, in denen sich eine solche Lösung anbieten könnte.

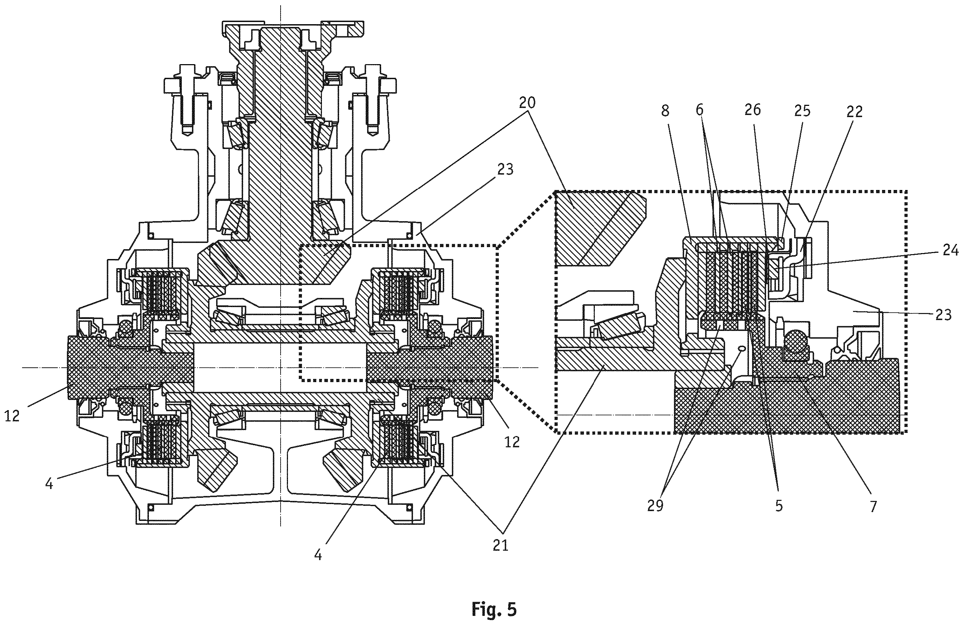

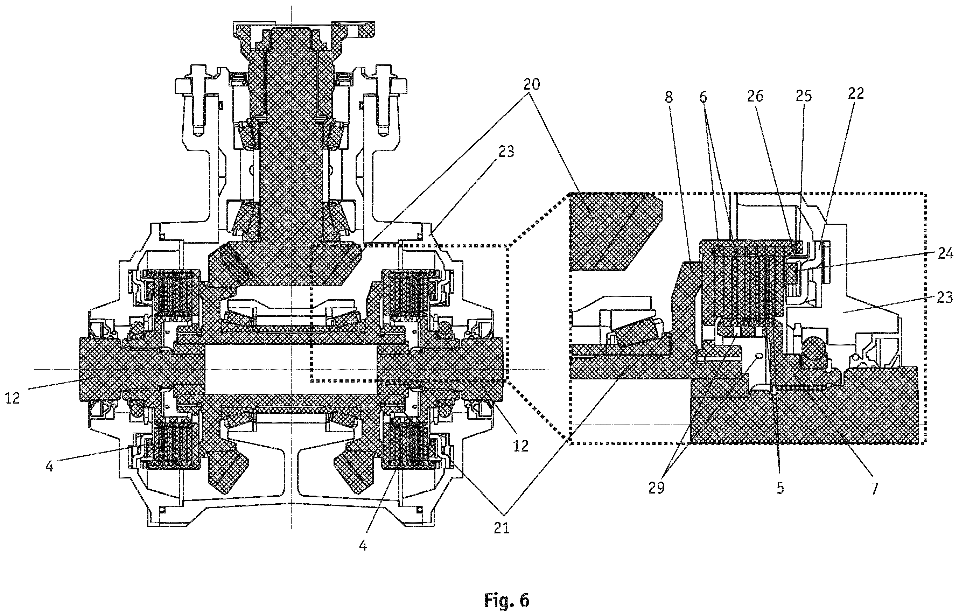

Figuren 5 und 6 zeigen den schon für Figur 3 beschriebenen differentiallosen Sekundärachsantrieb, wobei Figur 5 den Zustand bei abgeschalteter Sekundärachse und Figur 6 den Zustand bei zugeschalteter Sekundärachse zeigen.

Das Antriebsritzel 20 ist über einen Flansch mit der Zwischenwelle drehfest verbunden und mit einem Tellerrad im Eingriff. Das Tellerrad ist mit einer Tellerradträgerwelle 21 fest verbunden. Deren Lagerung im Achsantriebsgehäuse gewährleistet, dass sowohl das eingeleitete Drehmoment als auch die Verzahnungskräfte aufgenommen werden. Außenlamellenträger 8 der beiden Kupplungen sind mit der Tellerradträgerwelle 21 drehfest verbunden. Zwischen den Außenlamellenträgern 8 und Innenlamellenträger 7 ist ein Lamellenpaket aus Außenlammellen 6 und Innenlamellen 5 der Seitenwellenkupplungen 4 platziert. Der mit den Innenlamellen drehfest verbundene Innenlamellenträger 7 ist wiederum über eine Keilverzahnung mit der Seitenwelle 12 verbunden.

Über einen hydraulisch betätigten Druckkolben 22, der sich in einem seitlichen Achsantriebsgehäusedeckel 23 befindet, wird das Lamellenpaket zusammengepresst und die Kupplung geschlossen, so dass bei zugeschalteter Sekundärachse (Hang-On Betrieb) die Antriebsleistung über das Lamellenpaket zu den Antriebsrädern erfolgt. Zwischen Lamellenpaket und Druckkolben 22 ist ein Drucklager 24 angeordnet, welches den Drehzahlausgleich zwischen dem stehenden Druckkolben 22 und dem rotierenden Lamellenpaket gewährleistet.

Figur 5 verdeutlicht, dass im abgeschalteten Modus nur wenige Bauteile der Hinterachse rotieren und die Verluste gering gehalten werden. Bei abgeschaltetem Sekundärantrieb (Figur 5-geöffnete Kupplung) drehen vom Kupplungspaket lediglich der Innenlamellenträger7 mit den damit verbundenen Innenlamellen 5, sowie einige Lagerkomponenten. Der Außenlamellenträger 8 mit den Außenlamellen 6 und der Druckkolben 22 stehen. Dies ist besonders vorteilhaft, da durch die Anordnung das komplette Drucklager 24 ebenfalls zum Stillstand kommt. Die Wellfeder 25, die sich zwischen dem Außenlamellenträger 8 und einer Z-Scheibe 26 des Drucklagers 24 abstützt, dient dazu, das Lamellenpaket im nicht druckbeaufschlagten Zustand auseinander zu drücken, um möglichst wenig Reibung entstehen zu lassen. Bei geschlossener Kupplung drehen hingegen alle Komponenten der Hinterachse (Verzahnung, Kupplung und Drucklager), wie aus einem Vergleich der Figuren 5 und 6, in denen jeweils die stillstehenden Hinterachskomponenten einfach schraffiert und die rotierenden Hinterachskomponenten kreuzschraffiert dargestellt sind, hervorgeht.

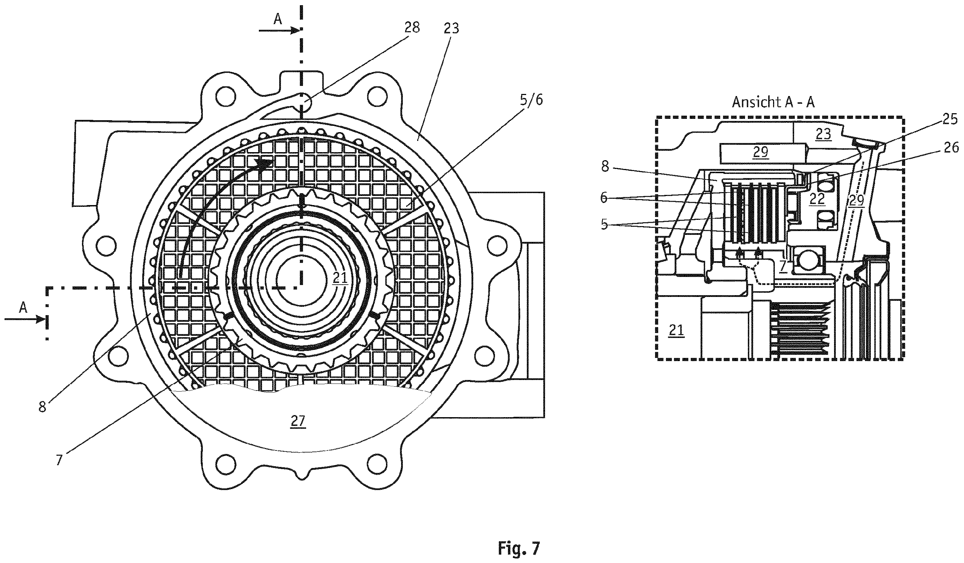

Ein weiterer Aspekt, der die Verlustleistung im Sekundärantriebsstrang minimiert und zum Erfindungsgedanken beiträgt, ist eine Bedarfsbeölung der Seitenwellenkupplungen bzw. der Lammellenpakete, die in Figur 7 dargestellt ist. Ist die Seitenwellenkupplung 4 geschlossen, rotiert der Außenlamellenträger 8 und schöpft mit seiner Außenseite Öl aus einem Ölsumpf 27, der in Figur 7 von dem Kupplungsgehäuse gebildet ist. Hierdurch wird das Öl in die Ölfangtasche 28 gefördert. Von dort aus gelangt das Öl über die Ölleitbohrungen 29 in den Innenlamellenträger und wird von der Fliehkraft radial nach außen verteilt. Diese Beölung dient zur Schmierung und Kühlung des Lamellenpakets. Ist die Seitenwellenkupplung jedoch geöffnet und der Sekundärantriebsstrang abgeschaltet, so dass die Kupplung keinen Kühl- und Schmierbedarf hat, steht der Außenlamellenträger und es wird folglich auch kein Öl gefördert, was ebenfalls zur Verringerung der Verlustleistungen bei entkoppeltem Sekundärantriebsstrang beiträgt.

Bei den Seitenwellenkupplungen 4 kann ferner Verlustleistung dadurch eingespart werden, dass die Reiblamellen der Seitenwellenkupplungen 4 je nachdem, ob es sich um Außenlamellen 8 oder Innenlamellen 7 handelt, unterschiedlich ausgestaltet werden. So können die Innenlamellen 7, also die Reiblamellen, die, wie vorstehend beschrieben wurde, bevorzugt drehfest mit den Seitenwellen 12 der Sekundärachse 2 verbunden sind und sich daher permanent drehen, als blanke Stahlscheiben mit verhältnismäßig reibungsarmer Oberfläche ausgestaltet sein. Rotieren diese während der Fahrt mit ständigem Kontakt zum Kühl- und Schmieröl, verursachen sie so nur geringe Reibungsverluste. Die Außenlamellen 8 hingegen, die bei abgeschaltetem Sekundärachsantriebsstrang ohnehin bevorzugt stillstehen, können den eigentlichen Reibbelag und eine hierin oder gesondert angeordnete Schmier- und Kühlöl fördernde Benutung aufweisen.

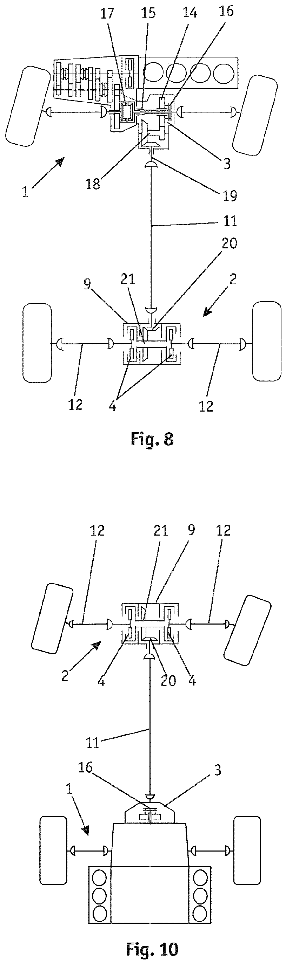

Figuren 8, 9a, 9b und 10 zeigen in einer schematischen Darstellung mögliche Antriebskonzepte, bei denen das Prinzip der Erfindung verwirklicht ist, wobei die Erfindung selbstverständlich nicht auf die drei dargestellten Antriebskonzepte beschränkt ist.

In Figur 8 ist als ein mögliches Antriebsstrangkonzept ein Antriebsstrang mit quer eingebautem Frontmotor und permanentem Frontantrieb (Primärantriebsstrang mit Primärachse 1) und einer über eine Zuschalteinrichtung 3 zuschaltbaren Sekundärachse 2, die über eine Zwischenwelle 11 miteinander verbunden sind (Sekundärantriebsstrang), gezeigt. Der Sekundärachsantrieb, also der Antrieb der Sekundärachsseitenwellen 12, wird über Seitenwellenkupplungen 4 differentiallos erreicht. Figur 8 entspricht dem schon in Figur 3 gezeigten Antriebsstrang.

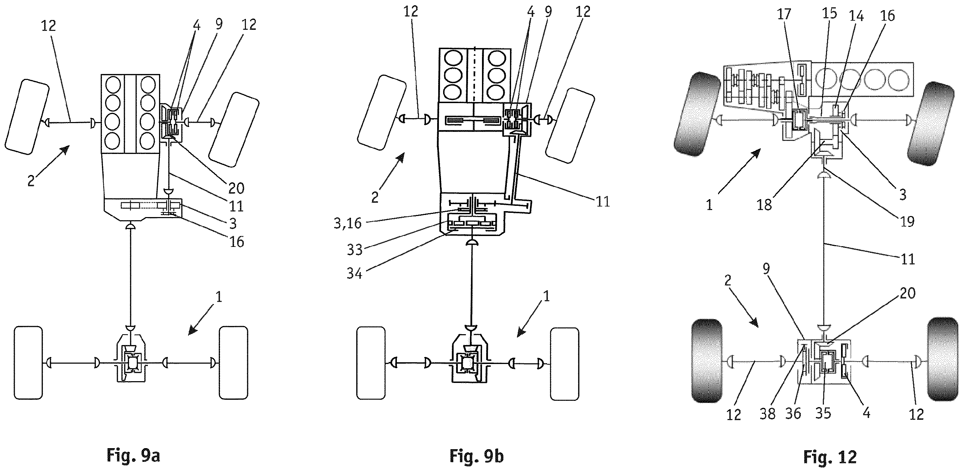

Figuren 9a und 9b zeigen als zweites mögliches Antriebsstrangkonzept einen Antriebsstrang mit längs eingebautem Frontmotor und permanent angetriebener Hinterachse als Primärachse 1. Die Vorderachse mit den Sekundärachsseitenwellen 12 kann als Sekundärachse 2 bei Bedarf über die Zuschalteinrichtung 3, die Zwischenwelle 11 und die Seitewellenkupplungen 4 dem Primärantriebsstrang zugeschaltet werden.

Bei Figur 9b liegt die Besonderheit vor, dass ein zusätzliches Mittendifferential 33 vorgesehen ist. Dieses kann unter anderem für den Fall, dass die Synchronisierung 16 geöffnet ist und somit keine Antriebsleistung auf die Zwischenwelle 11 übertragen wird, über eine Kupplung 34 geblockt werden, so dass es keine Differentialfunktion erfüllt sondern als Block umläuft und die Primärachse 1 weitestgehend verlustfrei antreibt. Wird über die Zuschalteinrichtung 3 und die Synchronisierung 16 der Sekundärantriebsstrang zugeschaltet, wird die Zwischenwelle 11 über die Beveloidverzahnung mit angetrieben und die Antriebsleistung wird, wie zuvor beschrieben, über die Seitenwellenkupplungen 4 auf die Seitenwellen 12 der Sekundärachse übertragen. Die Kupplung 34 kann in diesem Fall geöffnet werden, so dass das Mittendifferential 33 als offenes Differential fungiert und eine Längsausgleichsfunktion übernimmt. Alternativ kann das Mittendifferential auch wegfallen, wobei die Seitenwellenkupplungen 4 dann den Längsausgleich mit übernehmen müssen. Es ist selbstverständlich auch möglich, mit der Zuschalteinrichtung 3 den Planetensatz des Mittendifferentials 33 zu verblocken.

Figur 10 zeigt einen Antriebsstrang mit Heckmotor. Wie in Figuren 9a und 9b ist auch hier die Hinterachse die permanent angetriebene Achse und somit die Primärachse 1. Die Zwischenwelle 11 ist an eine an dem Hinterachsantrieb angeordnete Zuschalteinrichtung 3 angeflanscht und überträgt die Sekundärachsantriebsleistung bei Bedarf über den Seitenwellenkupplungen 4 aufweisenden und somit differentiallosen Vorderachsantrieb. Die Vorderachse bildet die Sekundärachse 2 mit den Sekundärachsseitenwellen 12.

Allen in den Figuren 8, 9a, 9b und 10 dargestellten Antriebskonzepten ist gemein, dass der Teil des Sekundärachsantriebsstrangs, der zwischen der Zuschalteinrichtung 3 und den Seitenwellenkupplungen 4 liegt, bei abgeschaltetem Sekundärantrieb vollständig stillsteht und somit keiner Verlustleistung verursacht.

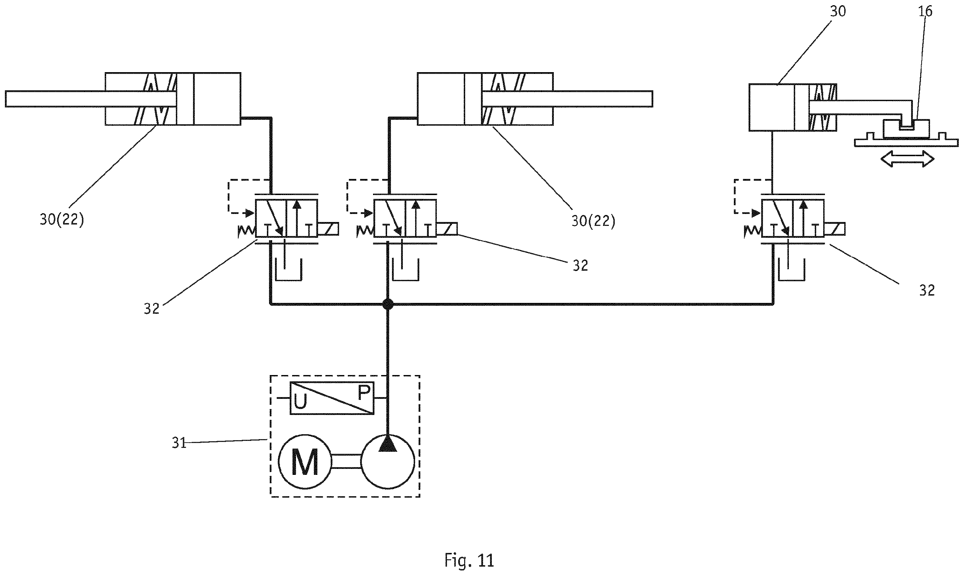

Figur 11 zeigt eine schematische Übersicht über eine mögliche hydraulische Schaltungsanordnung. Die Seitenwellenkupplungen und/oder der Zuschaltmechanismus der Zuschalteinrichtung 3 werden bevorzugt über eine bedarfsgeregelte Hydraulikeinheit 31 mit Drucköl versorgt, mit dem der Druckkolben 22 aus Figur 5 und 6 betätigt wird. Hierbei stellt die Hydraulikeinheit 31 einen Systemdruck zur Verfügung, welcher sich an dem höchsten momentan benötigten Druck orientiert. Über die Druckminderventile 32 wird der aktuell benötigte Druck in den Seitenwellenkupplungen eingeregelt. Auch das Zuschalten des Sekundärantriebstrangs über den Zuschaltmechanismus der Zuschalteinrichtung erfolgt über ein Druckminderventil 32. Sobald der Zuschaltmechanismus den Sekundärantriebsstrang zugeschaltet hat und die Übertragung der Sekundärantriebsleistung sichergestellt ist, kann der auf den Zuschaltmechanismus wirkende Schaltdruck wieder abgebaut werden.

Die in Figur 11 schematisch dargestellte hydraulische Aktuierung kann selbstverständlich auch auf andere Weise erfolgen. So ergeben sich beispielsweise Synergien bei der Verwendung von Doppelkupplungsgetrieben. Die hydraulische Betätigungseinrichtung der Zuschalteinrichtung und/oder der Seitewellenkupplungen kann bei räumlicher Nähe zum Doppelkupplungsgetriebe direkt von der Hydraulik des Doppelkupplungsgetriebes bedient werden. In dem Fall, dass sowohl die Zuschalteinrichtung als auch die Seitenwellenkupplungen getriebenah angeordnet sind, kann die Hydraulikeinheit 31 sogar komplett entfallen. Die Druckminderventile können dann im Doppelkupplungsgetriebe integriert sein.

Die vorstehend beschriebene Erfindung basiert auf einem sogenannten Hang-On Allradkonzept. Im Gegensatz zum permanenten Allrad wird beim Hang-On System die zweite Achse bei Bedarf über eine Kupplung aktiv zugeschaltet. Auswertungen von Lastkollektivdaten zeigen, dass die Hang-On Systeme nur geringe "aktive Zeitanteile" im Fahrzeugzyklus aufweisen. Die Erfindung nutzt die nicht aktiven Zeitanteile, um durch eine komplette Abschaltung des Allradantriebsstrangs die Leistungsverluste der drehenden Antriebskomponenten zu eliminieren.

Vorstehend ist die Erfindung im Rahmen eines Antriebsstrangkonzeptes beschrieben, bei dem die Allradabschaltung an der Hinterachse über die beiden Kupplungen realisiert wird. An der PTU (Power Take Off Unit) wird über eine Zuschalteinrichtung 3, die vorzugsweise eine Synchronisierung 16 aufweist, der Antriebsstrang zum Hinterachsgetriebe entkoppelt.

Die unter anderem in Figur 8 gezeigte Ausführung hat allerdings den Nachteil, dass bei besonders drehmomentstarken Geländefahrzeugen das Drehmoment nur über die ausschließlich reibschlüssig wirkenden Seitenwellenkupplungen 4 zu den Rädern der Sekundärachse übertragen wird. Für besonders drehmomentstarke Geländefahrzeuge ist die Übertragung der Antriebsmomente ausschließlich über die reibschlüssigen Seitenwellenkupplungen von Nachteil, da es aufgrund der Reibverluste im Kupplungspaket zu einer starken Wärmeentwicklung kommen kann. Ein formschlüssig arbeitendes Differential arbeitet dagegen quasi verlustfrei und ist daher für Drehmomentstarke Fahrzeuge am besten geeignet.

Die Figur 12 zeigt eine für drehmomentstarke Fahrzeuge angepasste Ausführung der zuvor beschriebenen Erfindung, die ein Abschaltsystem zur Abschaltung der Sekundärachse 2 mit formschlüssig wirkendem Sekundärachsdifferential 35, einer formschlüssig wirkenden seitlichen Seitenwellenkupplung 36 und mit einem zusätzlichen Schaltelement für diese Kupplung mit einer Sekundärachssynchronisierung 38 vorsieht. Das Schaltelement bzw. die Sekundärachssynchronisierung 38 sollte die formschlüssig wirkende Kupplung 36 in und außer Eingriff bringen können.

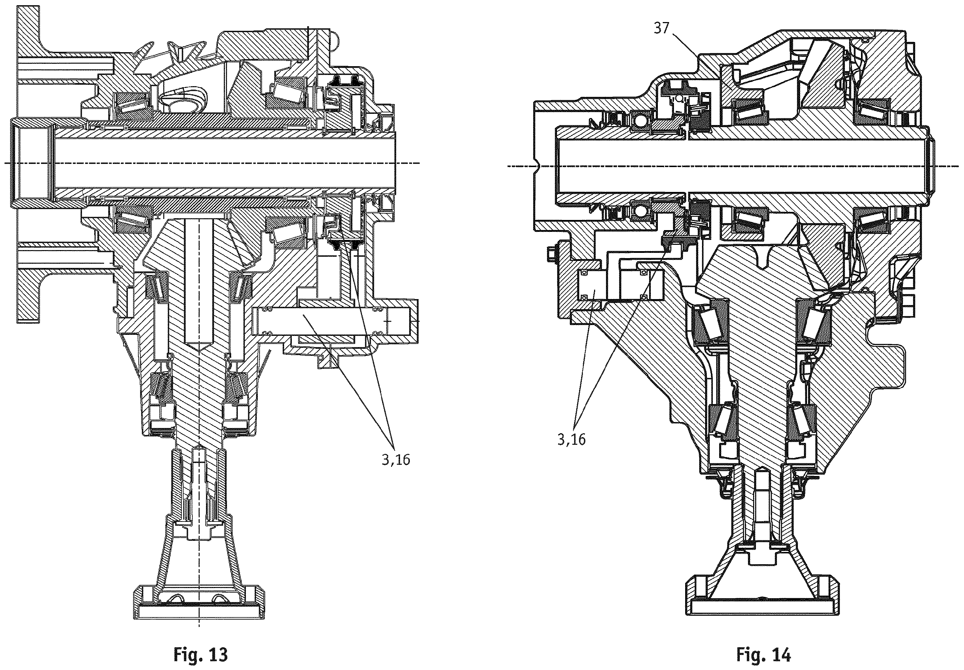

Die Abschaltung an der PTU wird, wie bereits beschrieben, aus Komfortgründen vorteilhaft über eine Synchronisierung 16 einer Zuschalteinrichtung 3 realisiert. Die Unterbringung der der Zuschalteinrichtung 3 samt Synchronisierung 16 links vom Tellerrad lässt sich relativ einfach realisieren, wie Figur 13 im Detail zeigt. Die Platzierung an dieser Stelle hat aber den Nachteil, dass der Bauraumbedarf an der PTU erheblich zunimmt.

Es wird daher vorgeschlagen, die Synchronisierung innerhalb des vorhandenen PTU-Gehäuses zu platzieren, wie Figur 14 illustriert. Hierzu wird das linke Tellerradlager über ein separates Lagerschild 37 im Gehäuse fixiert. Um die Synchronisierung zu montieren, wird dieses Lagerschild 37 mittels Schrauben oder sonstigen geeigneten Befestigungsmitteln mit dem PTU Gehäuse verbunden.

Die Synchronisierung wird bevorzugt zwischen der Tellerradwelle und der Antriebswelle platziert. Wie in Figur 14 ersichtlich, passt die Synchronisierungseinheit 16 sowie die dazugehörige Schaltung in die vorhandene Hüllkurve der PTU. Dies hat für den Kunden den Vorteil, dass die abschaltbare PTU ins vorhandene Package passt.

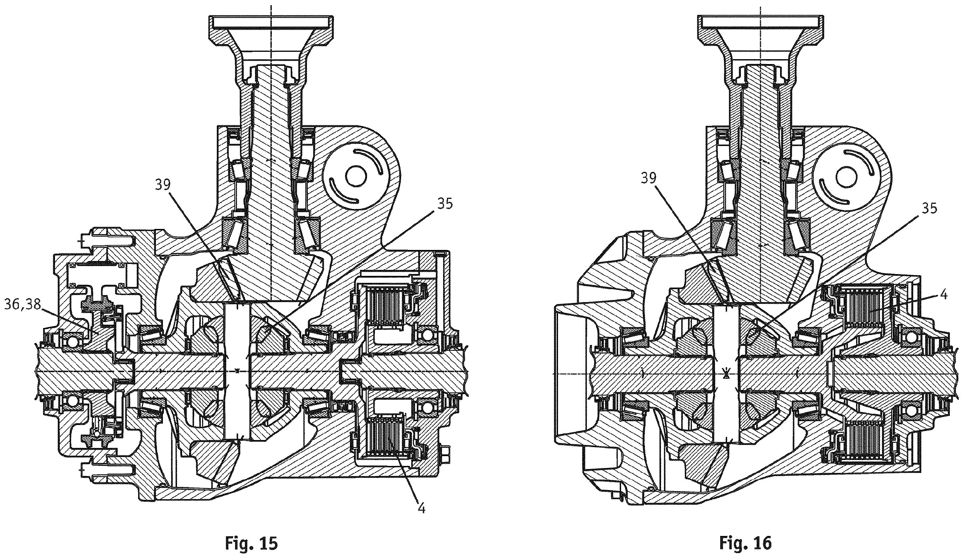

An der Hinterachse ist links neben dem Sekundärachsdifferential 35 eine formschlüssig wirkende Seitenwellenkupplung 36 vorgesehen, die über ein Schaltelement mit einer Sekundärachssynchronisierung 38 geschaltet wird (Figur 15). Rechts neben dem Sekundärachsdifferential befindet sich eine reibschlüssig wirkende Seitenwellenkupplung 4. Die Kupplung übernimmt dabei eine Doppelfunktion.

Im aktivierten Allradstrang, in dem alle Synchronisierungen 16, 38 geschlossen sind, arbeitet die Seitenwellenkupplung 4 als Hang-On System, bei dem das Drehmoment dosiert zu den Rädern übertragen wird. Ist die Kupplung offen, wird kein Drehmoment zu den Rädern übertragen, da das Differential im Achskörper frei drehen kann und nicht abgestützt wird. Im deaktivierten Allradstrang, also bei nicht in die Antriebsleistungsübertragung eingebundener Sekundärachse 2, wird die linke Synchronisierung 38 geöffnet, so dass beide Seitenwellen 12 und somit auch die Räder keine Verbindung zu den Hinterachskomponenten haben. Dieser Zustand wirkt sich besonders verbrauchsmindernd aus, da die Achskomponenten nicht rotieren und somit keine Verluste erzeugen, insbesondere wenn auch die in Figur 15 dargestellte reibschlüssige Seitenwellenkupplung 4 gleichzeitig geöffnet ist.

In einer weiteren Abwandlung wird vorgeschlagen, aus Kostengründen auf die zusätzliche Abschaltung an der Hinterachse zu verzichten (Figur 16). Im Gegensatz zur Lösung gemäß Figur 15, bei der im abgeschalteten Modus alle Teile der Achse stillstehen, drehen sich hierbei noch die Ausgleichsräder des Sekundärachsdifferentials 35, da die Trennung der linken Seitenwelle von Ausgleichsradsatz durch das Fehlen der Synchronisierung bzw. Kupplung fehlt und diese daher mitrotieren. Durch diesen Umstand ist ein geringer Verbrauchsnachteil gegenüber der Lösung in Figur 15 zu erwarten. Diesem Nachteil steht aber der geringere Kostenaufwand gegenüber. Das hat den Vorteil, dass der Hersteller bzw. der Kunde zwischen der eher verbrauchsoptimierten oder einer eher kostenoptimierten Lösung wählen kann.

Die Allradzuschaltung während der Fahrt sollte auch bei µ-Sprung bzw. µ-Split Bedingungen ohne Komforteinbußen von statten gehen und nicht als störend vom Fahrer wahrgenommen werden. Die Verwendung von sowohl einer Synchronisierung an der Hinterachse (Sekundärachssynchronisation 38) als auch einer Synchronisation 16 an der PTU wirkt sich vorteilhaft auf die Zuschaltgeschwindigkeit aus. Diese Zuschaltung wird im Folgenden für den in Figur 12 gezeigten Antriebsstrang beschrieben.

Bei einer Zuschaltung während der Fahrt wird zuerst die Sekundärachssynchronisation 38 an der Hinterachse geschlossen und somit die Differentialräder auf Drehzahl beschleunigt. Danach wird die Seitenwellenkupplung 4 geschlossen. Somit werden über die Räder die komplette Hinterachse sowie die als Kardanwelle ausgebildete Zwischenwelle 11 und der abgekoppelte Teil der PTU beschleunigt. Als letztes wird die Synchroneinheit 16 an der PTU eingelegt und der Kraftschluss zum Getriebe ist hergestellt. Diese Schaltsequenz hat den Vorteil, dass über die Hinterräder und die Seitenwellenkupplung 4 der komplette Antriebsstrang beschleunigt wird. Insbesondere wird er nach und nach beschleunigt, so dass die Synchronisierungen entlastet werden, da die Masse der Bauteile, die zwecks einer Drehzahlangleichung zu beschleunigen sind, verhältnismäßig gering bleibt.

Bei einer Zuschaltung bei µ-Sprung Bedingungen - die Vorderräder drehen durch und die Hinterachse steht - wird zuerst die Synchronisierung 16 an der PTU geschlossen und der Antriebsstrang bis hin zur Hinterachse wird beschleunigt. Danach wird die Sekundärachssynchronisation 38 an der Hinterachse eingelegt und die Verbindung zum linken Hinterrad hergestellt. Mit anschließender Zuschaltung der reibschlüssigen Seitenwellenkupplung 4 kann das Antriebsdrehmoment dosiert zu den Hinterrädern geleitet werden. Auch hierdurch lassen sich die gleichen wie vorstehend zur Zuschaltung während der Fahrt beschriebenen Vorteile realisieren.

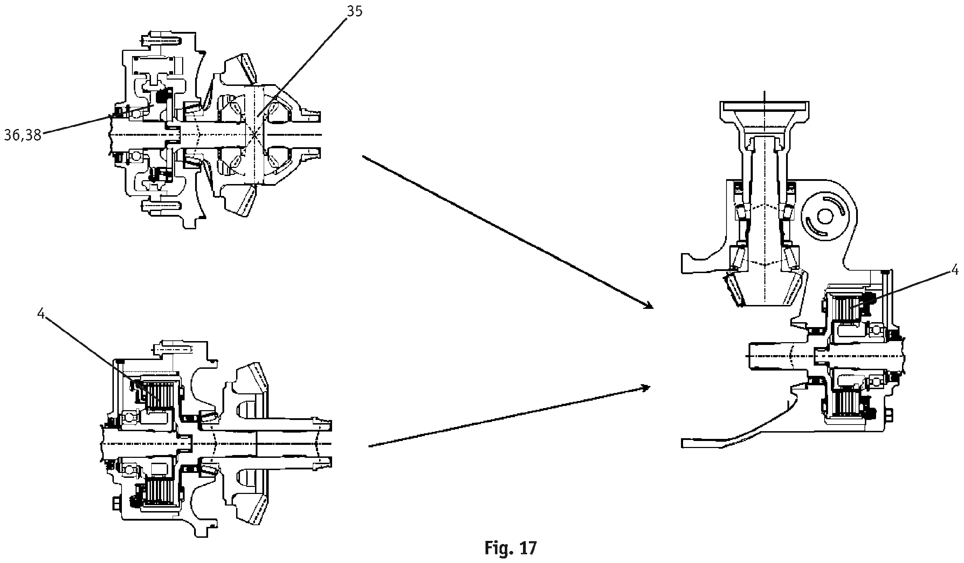

In Figur 17 wird ein modularer Achsaufbau gezeigt, bei dem durch Austausch der linken Synchroneinheit auch eine Sekundärachse mit zwei Seitenwellenkupplungen 4 auf einfache Weise realisierbar ist. Diese Modularität ermöglicht es, dass derselbe Grundachsaufbau bei Drehmomentstarken Geländefahrzeugen mit Differential ebenso eingesetzt werden kann wie bei sportiven Fahrzeugen mit zwei Seitenwellenkupplungen 4 und differentiallosem Achsantrieb. Die Sekundärachsantriebseinheit ist also derart modular aufgebaut, dass als zweite Kupplung wahlweise eine Reibschlüssig arbeitende Kupplung oder eine formschlüssig wirkende Kupplung einsetzbar ist.

Es ist ein Antriebstrang eines Kraftfahrzeugs beschrieben worden, umfassend eine permanent angetriebene Primärachse und eine der Primärachse über eine Zuschalteinrichtung, insbesondere eine oder mehrere formschlüssig wirkende Synchronisationseinheiten aufweisende Zuschalteinrichtung, zuschaltbare Sekundärachse.

Ebenfalls beschrieben wurde eine Sekundärachsantriebseinheit für den im vorstehenden Absatz definierten Antriebsstrang, aufweisend eine reibschlüssig wirkende erste Kupplung und eine zweite Kupplung, insbesondere eine als Synchronisierung wirkende formschlüssige zweite Kupplung, über die die mit dem Sekundärachsantrieb zusammenwirkenden Abtriebswellen von der dem Sekundärchsantrieb entkoppelbar sind. Diese Sekundärachsantriebseinheit ist bevorzugt derart modular aufgebaut, das als zweite Kupplung wahlweise eine reibschlüssig arbeitende Kupplung oder eine formschlüssig wirkende Kupplung einsetzbar ist. Außerdem wurde ein Gehäuse für eine solche modular aufgebaute Sekundärachsantriebseinheit beschrieben.

### Bezugszeichenliste

- 1: Primärachse
- 2: Sekundärachse
- 3: Zuschalteinrichtung
- 4: Seitenwellenkupplungen
- 5: Innenlamellen
- 6: Außenlamellen
- 7: Innenlamellenträger
- 8: Außenlamellenträger
- 9: Achsantriebseinheit
- 10: Hang-On Kupplung
- 11: Zwischenwelle
- 12: Sekundärachsseitenwelle
- 13: Radnabenkupplung
- 14: Stirnradstufe
- 15: Verbindungswelle
- 16: Synchronisierung
- 17: Antriebskorb (Primärachsdifferential)
- 18: Querwelle
- 19: Ritzelwelle
- 20: Antriebsritzel
- 21: Tellerradträgerwelle
- 22: Druckkolben
- 23: Antriebsgehäusedeckel
- 24: Drucklager
- 25: Wellfeder
- 26: Z-Scheibe
- 27: Ölsumpf
- 28: Ölfangtasche
- 29: Ölleitbohrung
- 30: Aktuator
- 31: Hydraulikeinheit
- 32: Druckminderventil
- 33: Mittendifferential
- 34: Kupplung
- 35: Sekundärachsdifferential
- 36: Seitenwellenkupplung (formschlüssig)
- 37: Lagerschild
- 38: Sekundärachssynchronisierung
- 39: Hypoid-Radsatz

## Patentansprüche

1. Sekundärachsantriebseinheit (9), eingerichtet für den Antrieb einer Sekundärachse (2) in einem Kraftfahrzeugantriebstrang, der einen Primärantriebsstrang mit einer permanent angetriebenen Primärachse (1) und eine der Primärachse über eine Zuschalteinrichtung zuschaltbare Sekundärachse (2) umfasst, wobei die Sekundärachsantriebseinheit (9) zumindest eine Seitenwellenkupplung (4) aufweist, über die bei zugeschalteter Sekundärachse (2) die Sekundärachsantriebsleistung in Sekundärachsseitenwellen (12) der Sekundärachse (2) eingeleitet und auf Antriebsräder der Sekundärachse (2) übertragbar ist und über die bei entkoppelter Sekundärachse (2) der zwischen der Zuschalteinrichtung (3) und der zumindest einen Seitenwellenkupplung (4) befindliche Abschnitt des Sekundärantriebsstrangs von den Antriebsrädern der Sekundärachse (2) entkoppelbar ist, und wobei die zumindest eine Seitenwellenkupplung (4) eine reibschlüssig wirkende Reiblamellenkupplung mit einem Außenlamellenträger (8), einem Innenlamellenträger (7) und einem Lamellenpaket mit Innenlamellen (5) und Außenlamellen (6) ist,
wobei
ein Drucklager (24) zwischen dem Lamellenpaket und dem Druckkolben (22) vorgesehen ist, das den Drehzahlausgleich zwischen dem stehenden Druckkolben und dem rotierenden Lamellenpaket gewährleistet, und sich eine Wellfeder (25) zwischen dem Außenlamellenträger (8) und einer Z-Scheibe (26) eines Drucklagers (24) abstützt.

2. Sekundärachsachsantriebseinheit (9) nach dem vorhergehenden Anspruch, **dadurch gekennzeichnet, dass** die mit den Sekundärantriebsrädern drehfest verbundenen Reiblamellen der zumindest einen Seitenwellenkupplung (4) als Innenlamellen (5) mit dem Innenlamellenträger (7) und die fahrzeugantriebsseitigen Reiblamellen als Außenlamellen (6) mit dem Außenlamellenträger (8) zusammenwirken.

3. Sekundärachsachsantriebseinheit (9) nach dem vorhergehenden Anspruch, **dadurch gekennzeichnet, dass** der Außenlamellenträger (8) bei zugeschalteter Sekundärachse (2) Öl zur Kühlung und/oder Schmierung der Reiblamellen fördert.

4. Sekundärachsachsantriebseinheit (9) nach einem der vorhergehenden Ansprüche, **dadurch gekennzeichnet, dass** die Sekundärachsantriebseinheit (9) eine erste, reibschlüssig wirkende Seitenwellenkupplung (4) für eine erste Sekundärachsseitenwelle (12) und eine zweite, formschlüssig wirkende Seitenwellenkupplung (36) für eine zweite Sekundärachsseitenwelle (12) umfasst.

5. Sekundärachsachsantriebseinheit (9) nach einem der Ansprüche 1 bis 3, **dadurch gekennzeichnet, dass** die Sekundärachsachsantriebseinheit (9) zur Übertragung der Antriebsleistung auf die Sekundärachsseitenwellen (12) ein formschlüssig wirkendes Differentialgetriebe (35) mit Ausgleichsrädern umfasst, wobei auf einer Seite des Differentialgetriebes (35) eine reibschlüssig wirkende Seitenwellenkupplung (4) für eine erste Sekundärachsseitenwelle (12) vorgesehen ist und
- auf der anderen Seite des Differentialgetriebes (35) eine formschlüssig wirkende Seitenwellenkupplung (36) für eine zweite Sekundärachsseitenwelle (12) vorgesehen ist,
oder
- auf der anderen Seite des Differentialgetriebes (35) auf eine Seitenwellenkupplung verzichtet ist, so dass eine Trennung der zweiten Sekundärachsseitenwelle (12) von einem Ausgleichsradsatz des Differentialgetriebes (35) fehlt und die Ausgleichsräder des Differentialgetriebes (35) mitrotieren.

6. Sekundärachsachsantriebseinheit (9) nach einem der Ansprüche 1 bis 3, **dadurch gekennzeichnet, dass** die Sekundärachsantriebseinheit (9) zwei reibschlüssige Seitenwellenkupplungen (4) aufweist, die bei zugeschalteter Sekundärachse (2) eine differentiallose Antriebsleistungsverteilung zwischen den Antriebsrädern der Sekundärachse unter Gewährleistung eines Querausgleichs nach Art eines Querdifferentials ausbilden.

7. Sekundärachsachsantriebseinheit (9) nach einem der Ansprüche 1 bis 3 oder nach Anspruch 6, **dadurch gekennzeichnet, dass** die Sekundärachsantriebseinheit (9) zwei Seitenwellenkupplungen (4) aufweist, die bei zugeschalteter Sekundärachse (2) eine differentiallose Antriebsleistungsverteilung zwischen der Primärachse (1) und der Sekundärachse (2) unter Gewährleistung eines Längsausgleichs nach Art eines Längsdifferentials ausbilden.

8. Sekundärachsachsantriebseinheit (9) nach einem der vorhergehenden Ansprüche, **dadurch gekennzeichnet, dass** bei geöffneter reibschlüssig wirkender Seitenwellenkupplung (4) und abgeschaltetem Sekundärantrieb der Außenlamellenträger (8) und das Drucklager (24) stehen.

9. Antriebstrang eines Kraftfahrzeugs mit einer Sekundärachsantriebseinheit (9) nach einem der Ansprüche 1 bis 8, umfassend eine über einen Primärantriebsstrang permanent angetriebene Primärachse (1) und eine der Primärachse über eine Zuschalteinrichtung (3) zuschaltbare Sekundärachse (2), wobei die Zuschalteinrichtung (3) einen Zuschaltmechanismus aufweist, über den der Sekundärantriebsstrang in den die Gesamtantriebsleistung übertragenden Antriebsstrang integrierbar ist, und wobei bei zugeschalteter Sekundärachse (2) die Sekundärachsantriebsleistung über zumindest eine reibschlüssig wirkende Seitenwellenkupplungen (4) in Sekundärachsseitenwellen (12) eingeleitet und auf Antriebsräder der Sekundärachse (2) übertragen ist, und wobei bei entkoppelter Sekundärachse (2) der zwischen der Zuschalteinrichtung (3) und der zumindest einen reibschlüssigen Seitenwellenkupplung (4) befindliche Abschnitt des Sekundärantriebsstrangs sowohl von dem Primärantriebsstrang als auch von den Sekundärantriebsrädern entkoppelt ist.

## Claims

1. Secondary axle drive unit (9), set up for driving a secondary axle (2) in a motor vehicle drive train which comprises a primary drive train with a permanently driven primary axle (1) and a secondary axle (2) which can be connected to the primary axle via a connecting device, the secondary axle drive unit (9) having at least one side shaft clutch (4), via which, when the secondary axle (2) is engaged, the secondary axle drive power is introduced into secondary axle side shafts (12) of the secondary axle (2) and can be transmitted to drive wheels of the secondary axle (2), and via which, when the secondary axle (2) is disengaged, the section of the secondary drive train located between the connecting device (3) and the at least one side shaft clutch (4) can be disengaged from the drive wheels of the secondary axle (2), and wherein the at least one side shaft clutch (4) is a frictionally engaged friction disc clutch with an outer disc carrier (8), an inner disc carrier (7) and a disc pack with inner discs (5) and outer discs (6),
wherein
a thrust bearing (24) is provided between the disc pack and the thrust piston (22), which ensures the speed compensation between the stationary thrust piston and the rotating disc pack, and a corrugated spring (25) is supported between the outer disc carrier (8) and a Z-disc (26) of a thrust bearing (24).

2. Secondary axle drive unit (9) according to the preceding claim, **characterized in that** the friction discs of the at least one side shaft clutch (4), which are connected to the secondary drive wheels in a rotationally fixed manner, interact as inner discs (5) with the inner disc carrier (7) and the friction discs on the vehicle drive side interact as outer discs (6) with the outer disc carrier (8).

3. Secondary axle drive unit (9) according to the preceding claim, **characterized in that** the outer disc carrier (8) conveys oil for cooling and/or lubricating the friction discs when the secondary axle (2) is engaged.

4. Secondary axle drive unit (9) according to one of the preceding claims, **characterized in that** the secondary axle drive unit (9) comprises a first, frictionally engaged side shaft clutch (4) for a first secondary axle side shaft (12) and a second, positively engaged side shaft clutch (36) for a second secondary axle side shaft (12).

5. Secondary axle drive unit (9) according to one of claims 1 to 3, **characterized in that** the secondary axle drive unit (9) comprises a positive-locking differential gear (35) with differential gears for transmitting the drive power to the secondary axle side shafts (12), a frictional side shaft clutch (4) for a first secondary axle side shaft (12) being provided on one side of the differential gear (35), and
- on the other side of the differential gear (35) a positive-locking side shaft clutch (36) is provided for a second secondary axle side shaft (12),
or
- a side shaft clutch is dispensed with on the other side of the differential gear (35), so that a separation of the second secondary axle side shaft (12) from a differential gear set of the differential gear (35) is absent and the differential gears of the differential gear (35) rotate along.

6. Secondary axle drive unit (9) according to one of claims 1 to 3, **characterized in that the secondary** axle drive unit (9) has two frictionally engaged side shaft clutches (4) which, when the secondary axle (2) is engaged, form a differential-free drive power distribution between the drive wheels of the secondary axle while ensuring a transverse compensation in the manner of a transverse differential.

7. Secondary axle drive unit (9) according to one of claims 1 to 3 or according to claim 6, **characterized in that** the secondary axle drive unit (9) has two side shaft clutches (4) which, when the secondary axle (2) is engaged, form a differential-free drive power distribution between the primary axle (1) and the secondary axle (2) while ensuring longitudinal compensation in the manner of a longitudinal differential.

8. Secondary axle drive unit (9) according to one of the preceding claims, **characterized in that** when the frictionally engaged side shaft clutch (4) is open and the secondary drive is switched off, the outer disc carrier (8) and the thrust bearing (24) are stationary.

9. Drive train of a motor vehicle with a secondary axle drive unit (9) according to one of claims 1 to 8, comprising a primary axle (1) permanently driven via a primary drive train and a secondary axle (2) which can be connected to the primary axle via a connecting device (3), wherein the connecting device (3) has a connecting mechanism via which the secondary drive train can be integrated into the drive train transmitting the total drive power, and wherein, when the secondary axle (2) is engaged, the secondary axle drive power is introduced into secondary axle side shafts (12) via at least one frictionally engaged side shaft clutch (4) and is transmitted to drive wheels of the secondary axle (2), and wherein, when the secondary axle (2) is decoupled, the section of the secondary drive train located between the connecting device (3) and the at least one frictionally engaged side shaft clutch (4) is decoupled both from the primary drive train and from the secondary drive wheels.

## Revendications

1. Unité d'entraînement d'essieu secondaire (9), aménagée pour l'entraînement d'un essieu secondaire (2) dans une chaîne cinématique de véhicule automobile, qui comprend une chaîne cinématique primaire avec un essieu primaire (1) entraîné en permanence et un essieu secondaire (2) pouvant être connecté à l'essieu primaire par l'intermédiaire d'un dispositif de connexion, l'unité d'entraînement d'essieu secondaire (9) présentant au moins un accouplement d'arbre latéral (4), par l'intermédiaire duquel, lorsque l'essieu secondaire (2) est enclenché, la puissance d'entraînement de l'essieu secondaire est introduite dans des arbres latéraux (12) de l'essieu secondaire (2) et peut être transmise à des roues d'entraînement de l'essieu secondaire (2) et par l'intermédiaire duquel, lorsque l'essieu secondaire (2) est découplé, la section de la ligne d'entraînement secondaire se trouvant entre le dispositif de connexion (3) et l'au moins un accouplement d'arbre latéral (4) peut être découplée des roues d'entraînement de l'essieu secondaire (2), et l'au moins un accouplement d'arbre latéral (4) étant un embrayage à lamelles de friction agissant par friction avec un support de lamelles extérieur (8), un support de lamelles intérieur (7) et un paquet de lamelles avec des lamelles intérieures (5) et des lamelles extérieures (6),
dans lequel
un palier de pression (24) est prévu entre le paquet de lamelles et le piston de pression (22), qui assure la compensation de la vitesse de rotation entre le piston de pression immobile et le paquet de lamelles en rotation, et un ressort ondulé (25) s'appuie entre le support de lamelles extérieur (8) et un disque Z (26) d'un palier de pression (24).

2. Unité d'entraînement d'essieu secondaire (9) selon la revendication précédente, **caractérisée en ce que** les lamelles de friction de l'au moins un accouplement d'arbre latéral (4) reliées de manière solidaire en rotation aux roues d'entraînement secondaires coopèrent en tant que lamelles intérieures (5) avec le support de lamelles intérieures (7) et les lamelles de friction côté entraînement du véhicule coopèrent en tant que lamelles extérieures (6) avec le support de lamelles extérieures (8).

3. Unité d'entraînement d'essieu secondaire (9) selon la revendication précédente, **caractérisée en ce que** le support de lamelles extérieures (8) transporte de l'huile pour refroidir et/ou lubrifier les lamelles de friction lorsque l'essieu secondaire (2) est connecté.

4. Unité d'entraînement d'essieu secondaire (9) selon l'une des revendications précédentes, **caractérisée en ce que** l'unité d'entraînement d'essieu secondaire (9) comprend un premier accouplement d'arbre latéral (4) agissant par friction pour un premier arbre latéral d'essieu secondaire (12) et un deuxième accouplement d'arbre latéral (36) agissant par engagement positif pour un deuxième arbre latéral d'essieu secondaire (12).

5. Unité d'entraînement d'essieu secondaire (9) selon l'une des revendications 1 à 3, **caractérisée en ce que** l'unité d'entraînement d'essieu secondaire (9) comprend, pour la transmission de la puissance d'entraînement aux arbres latéraux d'essieu secondaire (12), un engrenage différentiel (35) à engagement positif avec des roues de compensation, un accouplement d'arbre latéral (4) à engagement par friction étant prévu d'un côté de l'engrenage différentiel (35) pour un premier arbre latéral d'essieu secondaire (12) et
- de l'autre côté de l'engrenage différentiel (35), il est prévu un accouplement d'arbre latéral (36) agissant par engagement positif pour un deuxième arbre latéral d'essieu secondaire (12),
ou
- de l'autre côté du différentiel (35), on renonce à un accouplement d'arbre latéral, de sorte qu'il manque une séparation du deuxième arbre latéral d'essieu secondaire (12) d'un jeu de roues d'équilibrage du différentiel (35) et que les roues d'équilibrage du différentiel (35) tournent avec lui.

6. Unité d'entraînement d'essieu secondaire (9) selon l'une des revendications 1 à 3, **caractérisée en ce que** l'unité d'entraînement d'essieu secondaire (9) présente deux accouplements d'arbres latéraux (4) à friction qui, lorsque l'essieu secondaire (2) est enclenché, forment une répartition de puissance d'entraînement sans différentiel entre les roues d'entraînement de l'essieu secondaire en garantissant un équilibrage transversal à la manière d'un différentiel transversal.

7. Unité d'entraînement d'essieu secondaire (9) selon l'une des revendications 1 à 3 ou selon la revendication 6, **caractérisée en ce que** l'unité d'entraînement d'essieu secondaire (9) présente deux accouplements d'arbres latéraux (4) qui, lorsque l'essieu secondaire (2) est connecté, forment une répartition de puissance d'entra nement sans différentiel entre l'essieu primaire (1) et l'essieu secondaire (2) en garantissant un équilibrage longitudinal à la manière d'un différentiel longitudinal.

8. Unité d'entraînement d'essieu secondaire (9) selon l'une des revendications précédentes, **caractérisée en ce que**, lorsque l'accouplement d'arbre latéral (4) agissant par friction est ouvert et que l'entraînement secondaire est désactivé, le support de lamelles extérieur (8) et le palier de butée (24) sont à l'arrêt.

9. Chaîne cinématique d'un véhicule automobile avec une unité d'entraînement d'essieu secondaire (9) selon l'une des revendications 1 à 8, comprenant un essieu primaire (1) entraîné en permanence par une chaîne cinématique primaire et un essieu secondaire (2) pouvant être connecté à l'essieu primaire par un dispositif de connexion (3), le dispositif de connexion (3) présentant un mécanisme de connexion par lequel la chaîne cinématique secondaire peut être intégrée dans la chaîne cinématique transmettant la puissance d'entraînement totale, et dans lequel, lorsque l'essieu secondaire (2) est enclenché, la puissance d'entraînement de l'essieu secondaire est introduite dans des arbres latéraux (12) de l'essieu secondaire par l'intermédiaire d'au moins un accouplement d'arbre latéral (4) agissant par friction et est transmise à des roues d'entraînement de l'essieu secondaire (2), et dans lequel, lorsque l'essieu secondaire (2) est découplé, la section de la ligne d'entraînement secondaire se trouvant entre le dispositif de connexion (3) et l'au moins un accouplement d'arbre latéral (4) à friction est découplée aussi bien de la ligne d'entraînement primaire que des roues d'entraînement secondaire.
